(19) Europäisches Patentamt / European Patent Office / Office européen des brevets

(11) **EP 4 651 594 A1**

(12) **EUROPEAN PATENT APPLICATION**
published in accordance with Art. 153(4) EPC

(43) Date of publication:
**19.11.2025 Bulletin 2025/47**

(21) Application number: **23922545.1**

(22) Date of filing: **28.12.2023**

(51) International Patent Classification (IPC):
**H04W 72/044** (2023.01)

(52) Cooperative Patent Classification (CPC):
**H04W 36/14; H04W 72/044; H04W 72/20**

(86) International application number:
**PCT/CN2023/142969**

(87) International publication number:
**WO 2024/169430 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2023 CN 202310188631**

(71) Applicant: **Huawei Technologies Co., Ltd.
Shenzhen, Guangdong 518129 (CN)**

(72) Inventors:
• **ZHANG, Yi
Shenzhen, Guangdong 518129 (CN)**
• **SU, Hongjia
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) Embodiments of this application provide a communication method and apparatus, and pertain to the field of communication technologies, to schedule a terminal device more efficiently. In this method, because a gain and/or a width of a beam of the terminal device may indicate a beam coverage area of the terminal device, a first network device may determine the beam coverage area of the terminal device based on first indication information reported by the terminal device. In this way, the first network device can directly indicate the terminal device to perform handover to a network device that can be covered by the beam of the terminal device, for example, a second network device, to schedule the terminal device more efficiently.

First network device — Terminal device

S601: The terminal device sends first indication information to the first network device

S602: The first network device sends a handover command to the terminal device based on the first indication information

FIG. 6

## Description

This application claims priority to Chinese Patent Application No. 202310188631.X, filed with the China National Intellectual Property Administration on February 17, 2023 and entitled "COMMUNICATION METHOD AND APPARATUS", which is incorporated herein by reference in its entirety.

## TECHNICAL FIELD

Embodiments of this application relate to the communication field, and in particular, to a communication method and apparatus.

## BACKGROUND

In a 5th generation (5th generation, 5G) mobile communication system, a serving network device may deliver a measurement configuration to a terminal device, and the terminal device may trigger, based on the measurement configuration, measurement on a radio signal strength of a neighboring cell, and report a measurement result to the serving network device, so that the serving network device schedules the terminal device for use.

However, how to schedule the terminal device more efficiently is a hot issue in current research.

## SUMMARY

Embodiments of this application provide a communication method and apparatus, to schedule a terminal device more efficiently.

To achieve the foregoing objective, the following technical solutions are used in embodiments of this application.

According to a first aspect, a communication method is provided. The method includes: A terminal device sends first indication information to a first network device, and receives a handover command from the first network device. The first indication information indicates a gain of a beam of the terminal device and/or a width of the beam of the terminal device, and the handover command is used to instruct the terminal device to perform handover to a second network device.

It can be learned from the method according to the first aspect and the second aspect that, because the gain and/or the width of the beam of the terminal device indicate/indicates a beam coverage area of the terminal device, the first network device may determine the beam coverage area of the terminal device based on the first indication information reported by the terminal device. In this way, the first network device can directly indicate the terminal device to perform handover to a network device that can be covered by the beam of the terminal device, for example, the second network device, to schedule the terminal device more efficiently.

In a possible design solution, the gain of the beam of the terminal device may include at least one of the following: a maximum power main lobe gain of the beam of the terminal device, a half-power main lobe gain of the beam of the terminal device, or equivalent isotropically radiated power. Alternatively, the gain of the beam of the terminal device may be indicated by using other possible information. This is not limited.

It can be learned that the maximum power main lobe gain of the beam of the terminal device, the half-power main lobe gain of the beam of the terminal device, or the equivalent isotropically radiated power may indicate a distance that can be covered by the beam of the terminal device. Therefore, the first network device may directly learn of the distance that can be covered by the beam of the terminal device. The maximum power main lobe gain of the beam of the terminal device and the equivalent isotropically radiated power may directly indicate a maximum distance that can be covered by the beam of the terminal device. However, for the half-power main lobe gain of the beam of the terminal device, the first network device usually needs to convert the half-power main lobe gain into the maximum power main lobe gain of the beam of the terminal device or the equivalent isotropically radiated power, to learn of the maximum distance that can be covered by the beam of the terminal device.

In a possible design solution, the width of the beam of the terminal device may include at least one of the following: a half-power main lobe width of the beam of the terminal device, or a quantity of beams of the terminal device. Alternatively, the width of the beam of the terminal device may be indicated by using other possible information. This is not limited.

It can be learned that the half-power main lobe width of the beam of the terminal device or the quantity of beams of the terminal device may indicate a width that can be covered by the beam of the terminal device. Therefore, the first network device may directly learn of the width that can be covered by the beam of the terminal device. The half-power main lobe width of the beam of the terminal device may directly indicate a maximum width that can be covered by the beam of the terminal device. However, for the quantity of beams of the terminal device, the first network device usually needs to convert the quantity of beams of the terminal device into the half-power main lobe width of the beam of the terminal device, to learn of the maximum width that can be covered by the beam of the terminal device. For example, the beam coverage area of the terminal device is 360°. If the quantity of beams of the terminal device is 8, the first network device may learn that a half-power main lobe width of each beam is 45°.

In a possible design solution, the first indication information further indicates a beam direction of the terminal device. The beam direction of the terminal device may be a direction of the beam of the terminal device in a space coordinate system, or the beam direction of the terminal device may be an offset of the beam of the terminal device relative to a direction of the terminal device in the space coordinate system. In this way, the first network device may directly determine, based on the beam direction of the terminal device, that a network device in the beam direction may be used as a target network device for handover, for example, the second network device, to schedule the terminal device more efficiently.

In a possible design solution, the first indication information further indicates a location of the terminal device. It can be learned that, if the first network device does not know the location of the terminal device in advance, the terminal device may also reuse the first indication information to report the location of the terminal device, to ensure that the first network device can more accurately determine the target network device for handover. Alternatively, if the first network device knows the location of the terminal device in advance, the terminal device may no longer report the location, to reduce overheads.

Optionally, the method according to the first aspect may further include: The terminal device receives second indication information from the first network device, and sends the first indication information to the first network device based on the second indication information. The second indication information indicates the terminal device to report indication information of the terminal device. In other words, whether the terminal device reports the indication information to the first network device may be flexibly scheduled by the first network device based on the second indication information, to implement on-demand reporting and avoid communication redundancy.

Optionally, the method according to the first aspect may further include: The terminal device receives third indication information from the first network device, and sends capability information of the terminal device to the first network device based on the third indication information. The third indication information indicates the terminal device to report a capability of the terminal device, and the capability of the terminal device is whether the terminal device is capable of reporting the indication information of the terminal device. The capability information of the terminal device indicates that the terminal device is capable of reporting the indication information of the terminal device. In other words, the terminal device may notify, in advance, the first network device of the capability to report the indication information by the terminal device, so that the first network device can perform scheduling based on the capability of the terminal device. For example, the terminal device is instructed to report the indication information only when the terminal device can report the indication information. Otherwise, the terminal device does not need to report the indication information, to improve scheduling efficiency and avoid communication redundancy.

Optionally, the method according to the first aspect may further include: The terminal device performs handover to the second network device according to the handover command, that is, performs handover to a network device with a better signal, to ensure reliability and stability of communication.

Further, the first indication information is carried in at least one of the following: a radio resource control RRC message, a medium access control control element MAC CE, a physical uplink shared channel PUSCH, or a physical uplink control channel PUCCH. That is, the first indication information is carried in an existing information element, to reduce implementation difficulty; or may be carried in a new information element, to improve implementation flexibility. This is not limited.

According to a second aspect, a communication method is provided. The method includes: A first network device receives first indication information from a terminal device, and sends a handover command to the terminal device based on the first indication information. The first indication information indicates a gain of a beam of the terminal device and/or a width of the beam of the terminal device, and the handover command is used to instruct the terminal device to perform handover to a second network device.

In a possible design solution, the gain of the beam of the terminal device includes at least one of the following: a maximum power main lobe gain of the beam of the terminal device, a half-power main lobe gain of the beam of the terminal device, or equivalent isotropically radiated power.

In a possible design solution, the width of the beam of the terminal device includes at least one of the following: a half-power main lobe width of the beam of the terminal device, or a quantity of beams of the terminal device.

In a possible design solution, the first indication information further indicates a beam direction of the terminal device.

In a possible design solution, the first indication information further indicates a location of the terminal device.

Optionally, the method according to the first aspect may further include: The first network device sends second indication information to the terminal device, and receives the first indication information returned by the terminal device based on the second indication information. The second indication information indicates the terminal device to report indication information of the terminal device.

Optionally, the method according to the first aspect may further include: The first network device sends third indication information to the terminal device, and receives capability information from the terminal device. The third indication information indicates the terminal device to report a capability of the terminal device, and the capability of the terminal device is whether the terminal device is capable of reporting the indication information of the terminal device. The capability information of the terminal device indicates that the terminal device is capable of reporting the indication information of the terminal device.

Further, the first indication information is carried in at least one of the following: a radio resource control RRC message, a medium access control control element MAC CE, a physical uplink shared channel PUSCH, or a physical uplink control channel PUCCH.

For other technical effects of the communication method according to the second aspect, refer to technical effects of the communication method according to the first aspect. Details are not described herein again.

According to a third aspect, a communication apparatus is provided. The apparatus includes modules configured to perform the method according to the first aspect, for example, a transceiver module and a processing module.

The transceiver module is configured to send first indication information to a first network device. The transceiver module is further configured to receive a handover command from the first network device. The first indication information indicates a gain of a beam of the communication apparatus according to the third aspect and/or a width of the beam of the communication apparatus. The handover command is used to instruct the communication apparatus to perform handover to a second network device.

In a possible design solution, the gain of the beam of the communication apparatus according to the third aspect includes at least one of the following: a maximum power main lobe gain of the beam of the communication apparatus, a half-power main lobe gain of the beam of the communication apparatus, or equivalent isotropically radiated power.

In a possible design solution, the width of the beam of the communication apparatus according to the third aspect includes at least one of the following: a half-power main lobe width of the beam of the communication apparatus, or a quantity of beams of the communication apparatus.

In a possible design solution, the first indication information further indicates a beam direction of the communication apparatus according to the third aspect.

In a possible design solution, the first indication information further indicates a location of the communication apparatus according to the third aspect.

Optionally, the transceiver module is further configured to receive second indication information from the first network device. The processing module is configured to control, based on the second indication information, the transceiver module to send the first indication information to the first network device. The second indication information indicates the communication apparatus according to the third aspect to report indication information of a terminal device.

Optionally, the transceiver module is further configured to receive third indication information from the first network device. The processing module is further configured to control, based on the third indication information, the transceiver module to send capability information of the communication apparatus according to the third aspect to the first network device. The third indication information indicates the communication apparatus to report a capability of the terminal device, and the capability of the communication apparatus is whether the communication apparatus is capable of reporting indication information of the communication apparatus. The capability information of the communication apparatus indicates that the communication apparatus is capable of reporting the indication information of the terminal device.

Optionally, the processing module is configured to perform handover to the second network device according to the handover command.

Further, the first indication information is carried in at least one of the following: a radio resource control RRC message, a medium access control control element MAC CE, a physical uplink shared channel PUSCH, or a physical uplink control channel PUCCH.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus is enabled to perform the communication method according to the first aspect.

It should be noted that the communication apparatus according to the third aspect may be a terminal device, may be a chip (system) or another part or component that may be disposed in the terminal device, or may be an apparatus including the terminal device. This is not limited in embodiments of this application.

In addition, for technical effects of the communication apparatus according to the third aspect, refer to technical effects of the communication method according to the first aspect. Details are not described herein again.

According to a fourth aspect, a communication apparatus is provided. The communication apparatus includes modules configured to perform the method according to the second aspect, for example, a transceiver module and a processing module.

The transceiver module is configured to receive first indication information from a terminal device. The processing module is configured to control, based on the first indication information, the transceiver module to send a handover command to the terminal device. The first indication information indicates a gain of a beam of the terminal device and/or a width of the beam of the terminal device, and the handover command is used to instruct the terminal device to perform handover to a second network device.

In a possible design solution, the gain of the beam of the terminal device includes at least one of the following: a maximum power main lobe gain of the beam of the terminal device, a half-power main lobe gain of the beam of the terminal device, or equivalent isotropically radiated power.

In a possible design solution, the width of the beam of the terminal device includes at least one of the following: a half-power main lobe width of the beam of the terminal device, or a quantity of beams of the terminal device.

In a possible design solution, the first indication information further indicates a beam direction of the terminal device.

In a possible design solution, the first indication information further indicates a location of the terminal device.

Optionally, the transceiver module is further configured to send second indication information to the terminal device. The transceiver module is further configured to receive the first indication information returned by the terminal device based on the second indication information. The second indication information indicates the terminal device to report indication information of the terminal device.

Optionally, the transceiver module is further configured to send third indication information to the terminal device. The transceiver module is further configured to receive capability information from the terminal device. The third indication information indicates the terminal device to report a capability of the terminal device, and the capability of the terminal device is whether the terminal device is capable of reporting the indication information of the terminal device. The capability information of the terminal device indicates that the terminal device is capable of reporting the indication information of the terminal device.

Further, the first indication information is carried in at least one of the following: a radio resource control RRC message, a medium access control control element MAC CE, a physical uplink shared channel PUSCH, or a physical uplink control channel PUCCH.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the communication method according to the second aspect.

It should be noted that the communication apparatus according to the fourth aspect may be a network device, may be a chip (system) or another part or component that may be disposed in the network device, or may be an apparatus including the network device. This is not limited in embodiments of this application.

In addition, for technical effects of the communication apparatus according to the fourth aspect, refer to technical effects of the communication method according to the second aspect. Details are not described herein again.

According to a fifth aspect, a communication apparatus is provided. The communication apparatus includes a processor. The processor is configured to perform the communication method according to the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory may be integrated with the processor, or may be separately disposed. The memory may be configured to store a computer program and/or data related to the communication method according to the first aspect or the second aspect.

In embodiments of this application, the communication apparatus according to the fifth aspect may be a network device, a chip (system) or another part or component that may be disposed in the network device, or an apparatus including the network device.

In addition, for technical effects of the communication apparatus according to the fifth aspect, refer to technical effects of the communication method according to the first aspect or the second aspect. Details are not described herein again.

According to a sixth aspect, a communication apparatus is provided. The communication apparatus includes a processor. The processor is coupled to a memory, and the processor is configured to execute a computer program stored in the memory, to enable the communication apparatus to perform the communication method according to the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In embodiments of this application, the communication apparatus according to the sixth aspect may be a network device, a chip (system) or another part or component that may be disposed in the network device, or an apparatus including the network device.

In addition, for technical effects of the communication apparatus according to the sixth aspect, refer to technical effects of the communication method according to the first aspect or the second aspect. Details are not described herein again.

According to a seventh aspect, a communication apparatus is provided, and includes a processor and a memory. The memory is configured to store a computer program. When the processor executes the computer program, the communication apparatus is enabled to perform the communication method according to the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be a network device, a chip (system) or another part or component that may be disposed in the network device, or an apparatus including the network device.

In addition, for technical effects of the communication apparatus according to the seventh aspect, refer to technical effects of the communication method according to the first aspect or the second aspect. Details are not described herein again.

According to an eighth aspect, a communication apparatus is provided, and includes a processor. The processor is configured to: after being coupled to a memory and reading a computer program in the memory, perform the communication method according to the first aspect or the second aspect based on the computer program.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the eighth aspect may be a network device, a chip (system) or another part or component that may be disposed in the network device, or an apparatus including the network device.

In addition, for technical effects of the communication apparatus according to the eighth aspect, refer to technical effects of the communication method according to the first aspect or the second aspect. Details are not described herein again.

According to a ninth aspect, a communication system is provided. The communication system includes the first network element according to the first aspect and/or the application function according to the second aspect.

According to a tenth aspect, a computer-readable storage medium is provided, including a computer program or instructions. When the computer program or the instructions are run on a computer, the computer is enabled to perform the communication method according to the first aspect or the second aspect.

According to an eleventh aspect, a computer program product is provided, including a computer program or instructions. When the computer program or the instructions are run on a computer, the computer is enabled to perform the communication method according to the first aspect or the second aspect.

**BRIEF DESCRIPTION OF DRAWINGS**

FIG. 1 is a diagram of measuring a neighboring cell signal by a UAV;
FIG. 2 is a diagram of a specific scenario in which a UAV measures a neighboring cell signal;
FIG. 3 is a diagram of an architecture of a communication system according to an embodiment of this application;
FIG. 4 is a diagram of a 5G system architecture;
FIG. 5 is a diagram of a CU-DU separated architecture;
FIG. 6 is a schematic flowchart of a communication method according to an embodiment of this application;
FIG. 7 is a diagram of a gain and a width of a beam of a terminal device according to an embodiment of this application;
FIG. 8 is a diagram 1 of a beam direction of a terminal device according to an embodiment of this application;
FIG. 9 is a diagram 2 of a beam direction of a terminal device according to an embodiment of this application;
FIG. 10 is a diagram 1 of obtaining a candidate network device set according to an embodiment of this application;

FIG. 11 is a diagram 2 of obtaining a candidate network device set according to an embodiment of this application;
FIG. 12 is a diagram 1 of a structure of a communication apparatus according to an embodiment of this application; and
FIG. 13 is a diagram 2 of a structure of a communication apparatus according to an embodiment of this application.

## DESCRIPTION OF EMBODIMENTS

For ease of understanding, the following first describes technical terms in embodiments of this application.

1. Uncrewed aerial vehicle (uncrewed aerial vehicle, UAV):

The uncrewed aerial vehicle is a non-manned aircraft operated by using a radio remote control device and a self-owned program control apparatus, and usually refers to an uncrewed aircraft, for example, various models of uncrewed aeroplanes, uncrewed helicopters, and uncrewed multicopters. A cellular communication system is initially designed for only a terrestrial user equipment (User Equipment, UE). That is, a signal radiation direction of a network device is oriented toward the ground. Therefore, a signal received by a UE in a high-rise building from the network device is usually poor. As a result, an indoor signal enhancement solution is usually used. For example, a small base station is deployed indoors to resolve a problem of poor signal quality.

As technologies of the uncrewed aerial vehicle continue to mature, a price of the uncrewed aerial vehicle continues to decrease, leading to increasingly widespread application. Consequently, there is a growing demand for long-distance flight of the UAV. However, most of the existing consumer-grade UAVs are operated by a remote control, and therefore, can control only flight within a line of sight or within a short distance. Military-grade UAVs use satellite navigation for flight, and are not yet suitable for large-scale promotion and application.

If a terrestrial cellular communication system can support a UAV, a flight control command of the UAV can be transmitted over a long distance beyond a line of sight, to help the UAV implement long-distance flight. In addition, information such as a photo or a video acquired by the UAV can also be transmitted back in real time at a high speed. Therefore, development of the UAV industry can be greatly promoted. Many of these emerging use cases can benefit from connecting the UAV to a cellular network as a UE.

The following describes specific application scenarios of the UAV.

(1) UAV can monitor infrastructure on a large scale, such as oil and gas pipeline inspection and flight route arrangement. Specifically, a remote control and image transmission distance of the UAV may be 100 km, and a flight height range may reach 150 m. In this application scenario, real-time image transmission is required, and a transmission rate of image transmission may reach 30 Mbps.

(2) The UAV can perform aerial searches on a large scale, for example, in mountainous areas or disaster areas with highly complex flight environments. Specifically, a remote control and image transmission distance of the UAV may be less than 10 km, and a flight height range may reach 300 m. In this application scenario, real-time image transmission is required, and a transmission rate of image transmission may reach 30 Mbps.

(3) The UAV can be used as a flight camera. Specifically, a remote control and image transmission distance of the UAV may be less than 10 km, and a flight height range may reach 500 m. In this application scenario, real-time image transmission is required, and a transmission rate of image transmission may reach 30 Mbps.

(4) The UAV can achieve automated agriculture on a large scale, such as spraying pesticides. Specifically, a remote control distance of the UAV may be less than 10 km, and a flight height range may reach 20 m. In this application scenario, real-time image transmission is not required.

(5) The UAV can arrange a delivery route of a package. Specifically, a remote control and image transmission distance of the UAV may be 50 km, and a flight height range may reach 300 m.

2. Signal measurement:

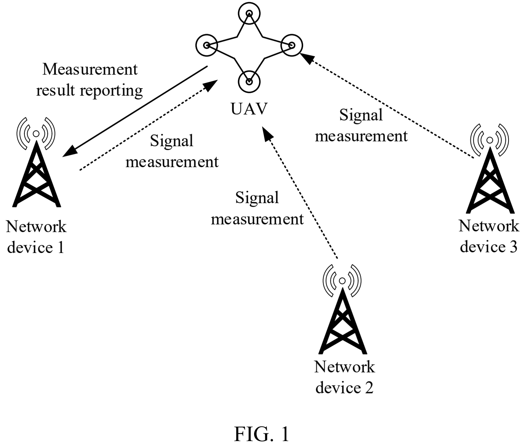

In a current cellular communication system, a terminal device measures a radio signal strength of a neighboring cell. Due to building obstructions or the like, a quantity of neighboring cells that can be detected by terrestrial user equipment is usually less than 8. However, for a terminal device at a high position, for example, an uncrewed aerial vehicle, where a flight height of the uncrewed aerial vehicle may exceed a height of a network device. Therefore, the UAV can receive a plurality of signals from another network device. For example, as shown in FIG. 1, a network device 1 establishes a connection to a UAV, and the network device may send measurement control information to the UAV, to indicate the UAV to measure radio signal strengths of the network device 1, a network device 2, and a network device 3, and receive a measurement result reported by the UAV.

Specifically, the following describes a specific signal measurement procedure.

(1) After the UE enters a connected state, a serving network device sends the measurement control information to the UE.

The measurement control information includes a measurement object, a measurement reporting configuration, a measurement identifier (identifier, ID), and a trigger quantity.

The measurement object mainly includes a frequency of a synchronization signal and physical broadcast channel (physical broadcast channel, PBCH) block (synchronization signal and PBCH block, SSB) to be measured, a subcarrier spacing, a measurement reporting threshold, an SSB-based measurement timing configuration (SSB-based measurement timing configuration, SMTC), and an offset. The SMTC is a window configured by the serving network device for the UE to perform SSB measurement. The UE only needs to perform SSB measurement within the SMTC window, and does not perform measurement outside the window. A period of the SMTC may be 5/10/20/40/80/160 ms. A size (SMTC duration) of the measurement window, that is, duration, may be 1/2/3/4/5 ms. The offset is a time offset of the measurement window relative to a start time of a measurement period.

The measurement reporting configuration mainly includes information such as a measurement trigger type and a reporting format. The measurement trigger type may include periodic measurement reporting and event-triggered reporting. For periodic reporting, the serving network device may configure a reporting period and a quantity of reporting times of measurement for the UE, and the UE may periodically report signal strengths of a specified quantity of neighboring cells. For event reporting, if a signal strength of a neighboring cell meets an entry condition of a preset measurement event, the UE triggers measurement reporting. For example, when a cell meets an entry condition, the UE triggers measurement reporting. The UE locally maintains a list of cells that have triggered the event and sorts the cells in descending order of signal strengths. When the UE performs measurement reporting, the serving network device configures a maximum quantity of reported cells for the UE. When a quantity of cells triggering the event reaches the maximum quantity of reported cells, a new measurement event is not included in a measurement reporting result.

The measurement ID includes: Each measurement ID corresponds to one measurement object and one reporting configuration. A plurality of measurement IDs may correspond to a plurality of measurement objects and a same reporting configuration, or may correspond to one measurement object and a plurality of reporting configurations.

The trigger quantity is a policy for triggering event reporting, including: reference signal received power (reference signal received power, RSRP), reference signal received quality (reference signal received quality, RSRQ), a received signal strength indicator (received signal strength indicator, RSSI), and a signal to interference plus noise ratio (signal to interference plus noise ratio, SINR). The serving network device may deliver measurement control of a plurality of indicators, such as the RSRP, the RSRQ, and the SINR. For example, if a measurement policy is determined based on RSRP of an SSB, when the RSRP obtained by the UE through measurement reaches a determining condition, the UE reports a measurement report to the serving network device, and the serving network device may generate a candidate frequency or cell list based on the RSRP, and perform further filtering based on RSRQ or an SINR. A specific implementation process of the RSRQ or the SINR is similar to that of the RSRP.

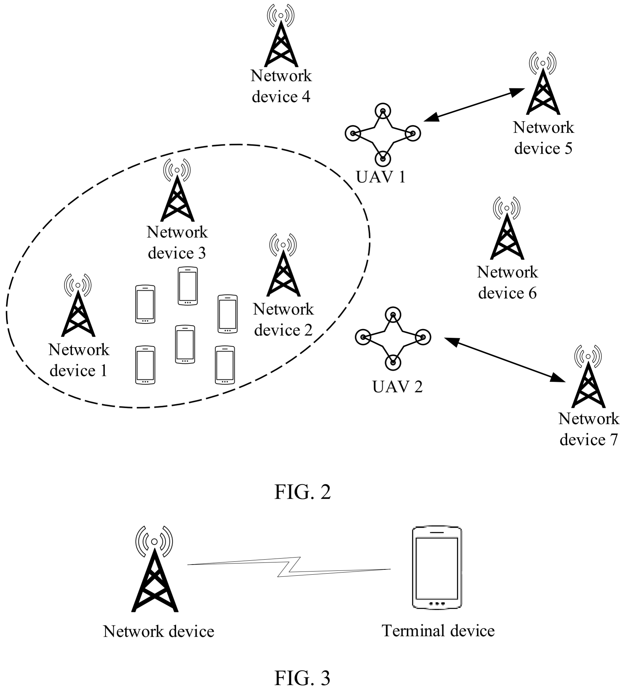

As shown in FIG. 2, it is assumed that a service scenario covered by a signal of a network device 1 to a network device 3 is live broadcasting in a stadium, which includes a large quantity of UEs. In this case, the network device 1 to the network device 3 need to meet high-throughput uplink and downlink transmission. That is, load of the network device 1 to the network device 3 is large. In this case, if a UAV 1 and a UAV 2 need to perform real-time broadcasting on site, the UAV 1 and the UAV 2 need to communicate with a nearby network device.

If the UAV 1 chooses to communicate with the nearest network device 3, the UAV 1 may cause interference to communication transmission in the entire stadium. For example, after establishing a connection to the network device 3, the UAV 1 may cause co-channel interference, adjacent channel interference, and the like to the network device 1 and/or a network device 2. In addition, because load of the network device 1 to the network device 3 is high, a high-rate transmission requirement of the UAV 1 further increases load pressure of the network device 3. Similarly, if the UAV 2 chooses to communicate with the nearest network device 2, the UAV 2 also causes interference to communication transmission in the entire stadium, and increases load pressure of the network device 2.

Therefore, in a current scenario, the network device 1 and the network device 2 may exchange load, interference, and the like with another network device, so that the UAV 1 and the UAV 2 establish connections to remote network devices. For example, the network device 3 indicates the UAV 1 to connect to a remote network device 5, and the network device 2 indicates the UAV 2 to connect to a remote network device 7.

3. Beam (beam) and beam pair link (beam pair link, BPL):

As a communication resource, the beam is special directional sending or receiving effect formed by a transmitter or a receiver of a network device or a terminal device by using an antenna array, and is similar to a light beam formed by converging light to a direction by using a flashlight. Signal sending and receiving in a form of the beam can effectively increase a signal transmission distance.

Beams may be classified into a transmit beam and a receive beam. A technology of forming the beam may be a beamforming technology or another technical means. The beamforming includes transmit beamforming and receive beamforming. The beamforming technology may be specifically a digital beamforming technology, an analog beamforming technology, a hybrid digital/analog beamforming technology, or the like.

The transmit beam is a beam that has a spatial directivity and that is formed by a signal sent by a transmit end device by using a specific beamforming weight. In an uplink direction, the transmit end device may be a terminal device; and in a downlink direction, the transmit end device may be a network device.

The receive beam is a beam that has a spatial directivity and that is formed by a signal received by a receive end device by using a specific beamforming weight. In an uplink direction, the receive end device may be a network device. In a downlink direction, the receive end device may be a terminal device.

Transmit beamforming: When a transmit end device with an antenna array sends a signal, a specific amplitude and phase are set on each antenna element of the antenna array, so that the sent signal has specific spatial directivity. That is, the signal has high signal power in some directions, and has low signal power in some other directions. A direction with highest signal power is a direction of a transmit beam. The antenna array includes a plurality of antenna elements. The additional specific amplitude and phase are a beamforming weight.

Receive beamforming: When a receive end device with an antenna array receives a signal, a specific amplitude and phase are set on each antenna element of the antenna array, so that a power gain of the received signal is directional. That is, the power gain is high when the signal is received in some directions, and the power gain is low when the signal is received in some other directions. A direction with a highest power gain when the signal is received is a direction of a receive beam. The antenna array includes a plurality of antenna elements. The additional specific amplitude and phase are a beamforming weight.

Sending a signal by using a transmit beam means sending the signal by using a beamforming weight. Receiving a signal by using a receive beam means receiving the signal by using a beamforming weight.

The beam may be a wide beam, a narrow beam, or a beam of another type.

The beam usually corresponds to a resource. For example, during beam measurement, the network device measures different beams by using different resources, and the terminal device feeds back measured resource quality, so that the network device can know quality of a corresponding beam. During data transmission, the beam may also be indicated by using the resource corresponding to the beam. For example, the network device indicates a transmission configuration indicator state (state) by using a transmission configuration index (transmission configuration index, TCI) field in downlink control information (downlink control information, DCI), and the terminal device determines, based on a reference resource included in the TCI-state, a beam corresponding to the reference resource. Different beams may be considered as different resources, and same information or different information may be sent by using (through) different beams.

The beam pair link is based on a beam concept. A beam pair link usually includes one transmit beam of a transmit end device and one receive beam of a receive end device. It should be noted that, if no description is provided, a transmit beam in the following is a transmit beam of the network device, and a receive beam is a receive beam of the terminal.

In a communication system such as a 5G new radio (new radio, NR) system, both the network device and the terminal device may generate one or more transmit beams and one or more receive beams. Before transmitting data, the network device and the terminal device need to perform beam alignment. In a communication protocol, the beam may be specifically represented as a digital beam, an analog beam, a spatial domain filter (spatial domain filter), a spatial filter (spatial filter), a spatial parameter (spatial parameter), a TCI, a TCI-state, or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. It may be understood that embodiments of this application are uniformly described by using the beam, but the beam may be replaced with and understood as another equivalent concept, and is not limited to the foregoing mentioned concepts.

4. Resource:

In a communication protocol, a reference signal is configured in a form of the resource. A network device configures each reference signal for a terminal device in the form of the resource. One resource is one configuration information unit, and usually includes a parameter related to a reference signal, for example, a time-frequency resource position, a quantity of ports, and a time domain type (periodic/semi-static/aperiodic) of the reference signal.

The resource may be an uplink signal resource, or may be a downlink signal resource. An uplink signal includes but is not limited to a sounding reference signal (sounding reference signal, SRS) and a demodulation reference signal (demodulation reference signal, DMRS). A downlink signal includes but is not limited to a channel state information reference signal (channel state information reference signal, CSI-RS), a cell-specific reference signal (cell-specific reference signal, CS-RS), a UE-specific reference signal (user equipment-specific reference signal, US-RS), a demodulation reference signal (demodulation reference signal, DMRS), and a synchronization signal/physical broadcast channel block (synchronization system/physical broadcast channel block, SS/PBCH block). The SS/PBCH block may be referred to as a synchronization signal block (synchronization signal block, SSB) for short.

The resource may be configured by using a radio resource control (radio resource control, RRC) message. In terms of a configuration structure, one resource is one data structure, and includes a related parameter of an uplink/downlink signal corresponding to the resource, for example, a type of the uplink/downlink signal, a resource granularity carrying the uplink/downlink signal, sending time and a sending periodicity of the uplink/downlink signal, and a quantity of ports used to send the uplink/downlink signal. Each resource of the uplink/downlink signal has a unique identifier, to identify the resource of the downlink signal. It may be understood that the identifier of the resource may also be referred to as an identifier of the resource. This is not limited in embodiments of this application.

5. Beam management:

In 5G, high-frequency communication may be used. That is, a relatively high frequency band, such as a 28 gigahertz (GHz) signal, is used to transmit data. A major problem of the high-frequency communication is that signal energy decreases sharply with a transmission distance, resulting in a short signal transmission distance. To resolve this problem, an analog beam technology is used in the high-frequency communication. Weighted processing is performed on an antenna array, the signal energy is concentrated in a small angle range, to form a signal similar to a light beam (referred to as an analog beam, a beam for short), so that the transmission distance is extended.

Both a network device and a terminal device need to perform transmission by using the beam. In downlink transmission, a beam used by the network device is referred to as a downlink transmit beam, and a beam used by the terminal device is referred to as a downlink receive beam. In uplink transmission, a beam used by the terminal device is referred to as an uplink transmit beam, and a beam used by the network device is referred to as an uplink receive beam. In downlink transmission and uplink transmission, specific beams used by the network device and the terminal device may be determined through a beam management procedure.

Beam management means a process in which the network device and the terminal device obtain and maintain a beam set used for sending and receiving, and is a reference workflow for beamforming in a multiple-input multiple-output (multiple input multiple output, MIMO) technology system. For example, the network device has M beams, and the terminal device has N beams. A downlink beam management process is as follows:

(1) Beam sweeping (beam sweeping): The beam sweeping is a process in which the network device or the terminal device sequentially selects, in a specified sweeping manner in a time period, a beam for sending or receiving, to cover a spatial region.

Specifically, the network device has M beams, and the terminal device has N beams. The network device configures a parameter related to downlink beam management for the terminal device, for example, including M measurement resources and a measurement period. The measurement resource may be a reference signal (reference signal, RS) used for beam measurement. The M measurement resources are in a one-to-one correspondence with the M beams of the network device. The network device sends a corresponding measurement resource by using each beam, and the terminal device measures the measurement resource to determine quality of a beam corresponding to the measurement resource. It may be understood that a beam of the network device is invisible to the terminal device, and the terminal device may determine quality of each measurement resource. However, the terminal device does not perceive a beam corresponding to the measurement resource.

2. Beam measurement (beam measurement): The beam measurement is a process in which the network device or the terminal device measures a received beamforming signal.

Specifically, channel quality corresponding to a beam of each network device is different from channel quality corresponding to a beam of each terminal device. The terminal device needs to measure channel quality between a beam of each network device and a beam of each terminal device, to determine an optimal beam used by the network device for transmission and an optimal beam used by the terminal device for reception. Specifically, in each measurement period, the network device sequentially sends a corresponding measurement resource by using the M beams, and the terminal device performs receiving and measurement by using one of the N beams, to determine channel quality between a beam currently used by the terminal device and the M beams, for example, reference signal received power. In each measurement period, the terminal device sequentially performs receiving and measurement by using different beams, and channel quality between the N beams of the terminal device and the M beams of the network device may be determined by using the N measurement periods.

(3) Beam reporting (beam reporting): The beam reporting is a process in which the terminal device reports a beam measurement result to the terminal device.

Specifically, through the beam measurement, the terminal device may determine, based on channel quality, an optimal beam of the terminal device corresponding to each measurement resource, in other words, an optimal receive beam of the terminal device or an optimal receive beam. The terminal device may report, to the network device, information about a measurement resource corresponding to the optimal beam of the terminal device, so that the network device determines an optimal beam used by the network device for transmission and an optimal beam used by the terminal device for reception. For example, if the network device performs downlink transmission by using a beam corresponding to a measurement resource, the terminal device performs receiving by using a corresponding optimal beam. The information that is about the measurement resource and that is reported by the terminal device may include identifiers and RSRP of measurement resources corresponding to a maximum of four optimal beams of the terminal device. The network device can determine, based on a correspondence between the M beams and the M measurement resources, a beam that is of the network device and that corresponds to a measurement resource identifier reported by the terminal device. For example, the terminal device may determine, through beam measurement, that four measurement resources with best quality are an RS #1, an RS #2, an RS #3, and an RS #4, and optimal beams of the terminal device corresponding to the four measurement resources are respectively a beam B3, a beam B2, the beam B2, and a beam B1. In other words, in the four measurement resources received by the terminal device by using the beam B1, quality of the RS #4 is the best. In the four measurement resources received by the terminal device by using the beam B2, quality of the RS #2 and the RS #3 is the best. In the four measurement resources received by the terminal device by using the beam B3, quality of the RS #1 is the best. The terminal device may report, to the network device, the RS #1, RSRP 1 corresponding to the RS #1, the RS #2, RSRP 2 corresponding to the RS #2, the RS #3, RSRP 3 corresponding to the RS #3, the RS #4, and RSRP 4 corresponding to the RS #4.

(4) Beam determination (beam determination): The beam determination is a process in which the network device or the terminal device selects a transmit beam or a receive beam of the network device or the terminal device.

Specifically, after the terminal reports, to the network device, a measurement result corresponding to an optimal beam of the terminal, the terminal may maintain a mapping relationship between the optimal beam of the terminal and a measurement resource corresponding to the optimal beam of the terminal. For example, the mapping relationship may be shown in the following Table 1.

Table 1

| RS identifier | Optimal beam of a terminal |
| --- | --- |
| RS #1 | Beam B3 |
| RS #2 | Beam B2 |
| RS #3 | Beam B2 |
| RS #4 | Beam B1 |

Beam management may include three states, which are specifically as follows:

P1: The terminal device measures a beam set sent by the network device, and selects a transmit beam of the network device and a receive beam of the terminal device.
P2: Based on P1, the terminal device measures a narrower transmit beam set sent by the network device, to improve a transmit beam of the network device.
P3: Based on P1, the terminal device measures a transmit beam of a same network device by using different receive beams, to improve a receive beam of the terminal device.

It may be understood that a maximum of 64 beam directions may be configured for one network device, and each beam direction corresponds to one synchronization signal block and a time-frequency resource that should be used by the terminal device for beam reporting. The synchronization signal block includes two types of synchronization signals, namely, a primary synchronization signal (primary synchronization signal, PSS) and a secondary synchronization signal (secondary synchronization signal, SSS).

Sequences of the primary synchronization signal and the secondary synchronization signal are generated based on a synchronization signal identifier (synchronization signal identifier, SSID), and the SSID corresponds to a physical layer cell identifier (physical-layer cell ID). The identity is determined according to the following formula:

$$N_{ID}^{cell} = 3N_{ID}^{(1)} + N_{ID}^{(2)}$$

Herein, $N_{ID}^{(1)} \in \{0,1,\dots,335\}$, and $N_{ID}^{(2)} \in \{0,1,2\}$.

A sequence of the primary synchronization signal is generated based on $N_{ID}^{(2)}$, and a sequence of the secondary synchronization signal is generated based on $N_{ID}^{(1)}$ and $N_{ID}^{(2)}$. After receiving the SSB, the terminal device performs blind detection on the primary synchronization signal and the secondary synchronization signal, to obtain corresponding $N_{ID}^{(1)}$ and $N_{ID}^{(2)}$, and correspondingly obtain $N_{ID}^{cell}$. The terminal device may distinguish, based on $N_{ID}^{cell}$ and a corresponding SSID, an SSB sent by each network device.

The network device may sequentially send a beam to each direction in a scanning manner, and the terminal device may measure the received beam to obtain reference signal received power of the SSB. In this case, the terminal device needs to correspond the measured reference signal received power of the SSB to a 6-bit SSB sequence number. Therefore, the terminal device needs to obtain three least significant bits from a physical broadcast channel demodulation reference signal (demodulation reference signal, DMRS), and obtain three most significant bits from physical broadcast channel payload (payload) bits. Therefore, the terminal device may combine the two to obtain the SSB sequence number. The PBCH DMRS is generated based on a pseudo-random sequence, and a manner of carrying the three least significant bits of the SSB sequence number is to determine an initial value $c_{init}$ of the pseudo-random sequence by using the three bits. Specifically, a process of generating the PBCH DMRS is as follows:

$$r(n) = \frac{1}{\sqrt{2}}\left(1 - 2 \cdot c(2n)\right) + j\frac{1}{\sqrt{2}}\left(1 - 2 \cdot c(2n+1)\right)$$

Herein, *r(n)* is a PBCH DMRS sequence, *c(n)* is the pseudo-random sequence, and c(n) may be determined according to the following formulas:

$$c(n) = \left(x_1(n + N_C) + x_2(n + N_C)\right)\bmod 2$$

$$x_1(n + 31) = \left(x_1(n + 3) + x_1(n)\right)\bmod 2$$

$$x_2(n + 31) = \left(x_2(n + 3) + x_2(n + 2) + x_2(n + 1) + x_2(n)\right)\bmod 2$$

Herein, $N_C = 1600$, $x_1(n)$ and $x_2(n)$ are m sequences, $x_1(n)$ may be initialized to $x_1(0) = 1$, $x_1(n) = 0$, $n = 1, 2, \dots, 30$, and $x_2(n)$ satisfies $c_{init} = \sum_{i=0}^{30} x_2(i) \cdot 2^i$. $c_{init}$ may be determined according to the following formula:

$$c_{init} = 2^{11}(\bar{\iota}_{SSB} + 1)\left(\lfloor N_{ID}^{cell}/4 \rfloor + 1\right) + 2^6(\bar{\iota}_{SSB} + 1) + \left(N_{ID}^{cell} \bmod 4\right)$$

$N_{ID}^{cell}$ is a physical layer cell identifier. When a maximum quantity of SSBs is 4, $\bar{\iota}_{SSB} = i_{SSB} + 4n_{hf}$, where $i_{SSB}$ indicates two least significant bits of the SSB sequence number, and $n_{hf}$ indicates whether the SSB is in the first half or the second half of a frame in which the SSB is located. If the SSB is in the first half of the frame in which the SSB is located, $n_{hf} = 0$. If the SSB is in the second half of the frame in which the SSB is located, $n_{hf} = 1$. When the maximum quantity of SSBs is 8 or 64, $\bar{\iota}_{SSB} = i_{SSB}$ indicates three least significant bits of the SSB sequence number. The terminal device obtains the SSB sequence number by performing blind detection on the PBCH DMRS.

Then, the terminal device may determine one SSB set by comparing SSB RSRP with the SSB sequence number, and report, to the terminal device on a given time-frequency resource, the SSB sequence number in the set and corresponding RSRP. The terminal device may perform beam determination based on reported information. In this way, an initial beam selection process is completed. It may be understood that a similar procedure is also used for uplink beam management, but different reference signals are used. For example, the reference signal may be an SRS. Details are not described.

Currently, in a 5th generation mobile communication system, a serving network device may deliver a measurement configuration to a terminal device, and the terminal device may trigger, based on the measurement configuration, measurement of a radio signal strength of a neighboring cell, and report a measurement result to the serving network device, so that the serving network device schedules the terminal device for use. However, how to schedule the terminal device more efficiently is a hot issue in current research.

For the foregoing technical problem, embodiments of this application provide the following technical solutions, to schedule the terminal device more efficiently. The following describes technical solutions of embodiments in this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, 4G, for example, a long term evolution (long term evolution, LTE) system, a worldwide interoperability for microwave access (worldwide interoperability for microwave access, WiMAX) communication system, 5G, for example, a new radio system, and a future communication system.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design solution described as an "example" in embodiments of this application should not be construed as being more preferred or having more advantages than another embodiment or design solution. Specifically, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "relevant (corresponding, relevant)", and "corresponding (corresponding)" may be sometimes interchangeably used. It should be noted that meanings expressed by the terms are matchable when differences of the terms are not emphasized. In addition, "/" mentioned in embodiments of this application may indicate an "or" relationship.

It may be understood that embodiments of this application, an "indication" may include a direct indication, an indirect indication, an explicit indication, or an implicit indication. When a piece of indication information is described for indicating A, it may be understood that the indication information carries A, directly indicates A, or indirectly indicates A.

In embodiments of this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device.

Network architectures and service scenarios described in embodiments of this application are intended to describe the technical solutions in embodiments of this application more clearly, and do not constitute a limitation on the technical solutions provided in embodiments of this application. A person of ordinary skill in the art may know that as the network architectures evolve and a new service scenario emerges, the technical solutions provided in embodiments of this application are also applicable to a similar technical problem.

For ease of understanding of embodiments of this application, a communication system shown in FIG. 3 is first used as an example to describe in detail a communication system applicable to an embodiment of this application. For example, FIG. 3 is a diagram of an architecture of a communication system to which a communication method according to an embodiment of this application is applicable.

As shown in FIG. 3, the communication system mainly includes a network device and a terminal device.

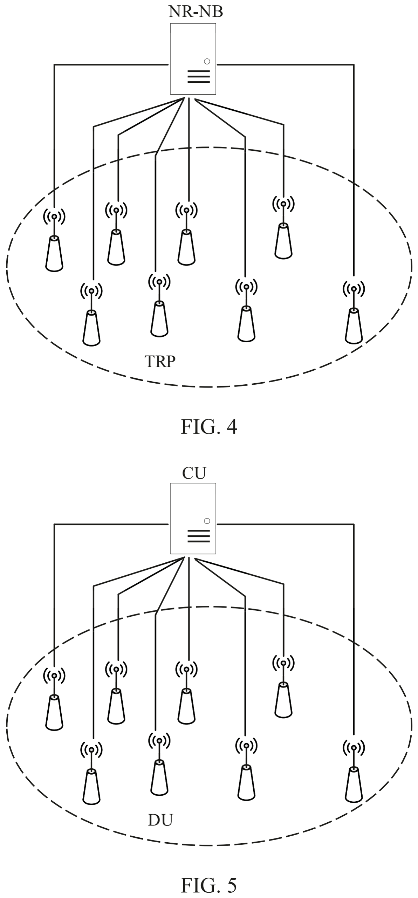

There may be one or more network devices, for example, a first network device and a second network device. The network device may be an access network (access network, AN) device, or may be referred to as a radio access network (radio access network, RAN) device. The RAN device may provide an access function for the terminal, and is responsible for functions such as radio resource management, quality of service (quality of service, QoS) management, and data compression and encryption on an air interface side. The RAN device may include a gNB in 5G, for example, an NR system, or one antenna panel or a group of antenna panels (including a plurality of antenna panels) of a base station in 5G, or may be a network node that forms a gNB, a transmission and reception point (transmission and reception point, TRP, or transmission point, TP) (as shown in FIG. 4), or a transmission measurement function (transmission measurement function, TMF), for example, a baseband unit (building baseband unit, BBU), a central unit (central unit, CU) or a distributed unit (distributed unit, DU) (as shown in FIG. 5), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include a next-generation mobile communication system, for example, a 6G access network device such as a 6G base station. Alternatively, in the next-generation mobile communication system, the network device may be named in another manner, which falls within the protection scope of embodiments of this application. This is not limited in embodiments of this application.

It may be understood that a difference between FIG. 4 and FIG. 5 lies in that a TRP in FIG. 4 is only a radio frequency unit or an antenna device, while the DU in FIG. 5 may implement a protocol stack function. For example, the DU may implement a physical layer function.

The terminal device may be a terminal having a transceiver function, or may be a chip or a chip system that may be disposed in the terminal. The terminal may also be referred to as a user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. The terminal in embodiments of this application may alternatively be a vehicle-mounted module, a vehicle-mounted component, a vehicle-mounted chip, or a vehicle-mounted unit that is built in a vehicle as one or more components or units. For example, the terminal device may be the foregoing UAV.

In the communication system, interaction between the first network device and the terminal device is used as an example. Because a gain and/or a width of a beam of the terminal device may indicate a beam coverage area of the terminal device, a first network device may determine the beam coverage area of the terminal device based on first indication information reported by the terminal device. In this way, the first network device can directly indicate the terminal device to perform handover to a network device that can be covered by the beam of the terminal device, for example, a second network device, to schedule the terminal device more efficiently.

It may be understood that FIG. 3 is a simplified diagram used as an example for ease of understanding. The communication system may further include another network device and/or another terminal device that are/is not shown in FIG. 3.

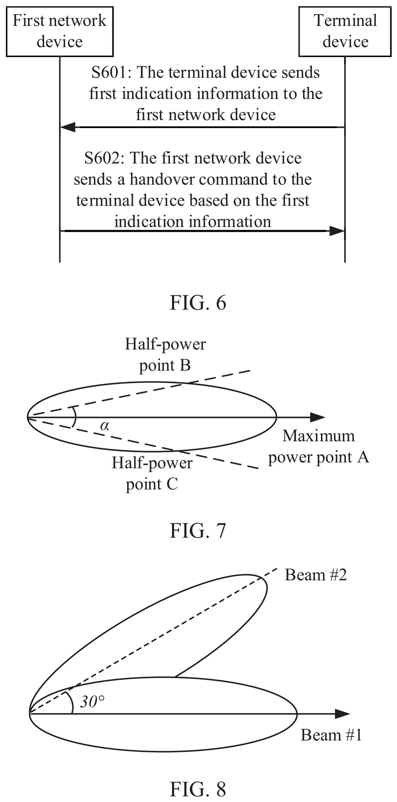

For ease of understanding, the following specifically describes the communication method provided in embodiments of this application with reference to FIG. 6 to FIG. 11.

For example, FIG. 6 is a schematic flowchart of a communication method according to an embodiment of this application. The method is applicable to communication between the first network device and the terminal in the foregoing communication system.

Specifically, as shown in FIG. 6, a procedure of the communication method is as follows.

S601: A terminal device sends first indication information to the first network device. The first network device receives the first indication information from the terminal device.

The first indication information may indicate a gain of a beam of the terminal device and/or a width of the beam of the terminal device.

The gain of the beam of the terminal device may include at least one of the following: a maximum power main lobe gain of the beam of the terminal device, a half-power main lobe gain of the beam of the terminal device, or equivalent isotropically radiated power (equivalent isotropically radiated power, EIRP).

The maximum power main lobe gain of the beam of the terminal device may be a gain in a maximum radiation direction of the beam of the terminal device. That is, the maximum power main lobe gain of the beam of the terminal device may be a gain of the beam of the terminal device at a maximum power point, and maximum power may be maximum radiated power of the beam of the terminal device. For example, as shown in FIG. 7, a point A is the maximum power point of the beam, and a gain corresponding to the point A is the maximum power main lobe gain of the beam. It may be understood that the maximum power main lobe gain of the beam of the terminal device may represent a maximum radiation distance of the beam of the terminal device.

The half-power main lobe gain of the beam of the terminal device may be a gain of the beam of the terminal device at a half-power point, that is, a corresponding gain when radiated power of the beam of the terminal device is reduced by 3 dB. Half power may be corresponding power when maximum radiated power of the beam of the terminal device is reduced by half. For example, as shown in FIG. 7, a point B and a point C are half-power points of the beam, and a gain corresponding to the point B or the point C is a half-power main lobe gain of the beam.

The equivalent isotropically radiated power may also be referred to as effective isotropically radiated power, and may be radiated power of the beam of the terminal device in a specified direction. Specifically, the equivalent isotropically radiated power may be transmit power of the beam in a maximum radiation or reception direction.

The width of the beam of the terminal device may include at least one of the following: a half-power main lobe width of the beam of the terminal device, or a quantity of beams of the terminal device.

The half-power main lobe width of the beam of the terminal device, that is, a 3 dB main lobe bandwidth, may be defined as an included angle between two half-power points of the beam of the terminal device, that is, an included angle between two directions in which the radiated power decreases by 3 dB on two sides of the maximum radiation direction of the beam of the terminal device. For example, as shown in FIG. 7, an included angle $\alpha$ between the point B and the point C is a half-power main lobe width of the beam.

The quantity of beams of the terminal device may be a quantity of beams included in one beam sweeping period when the terminal device performs beam periodic sweeping. Specifically, the terminal device may sweep a beam according to a period. In other words, the terminal device may receive SSB beams from different network devices by using receive beams at different moments, to perform beam measurement on transmit beams of the different network devices, or establish connections to the different network devices. It may be understood that the first network device may determine a beam width of each beam based on the quantity of beams of the terminal device. For example, if one beam sweeping period corresponding to the terminal device includes eight beams, and beam coverage of the terminal device is 360°, a width of each beam may be determined as 45°.

The first indication information may further indicate a beam direction of the terminal device. The beam direction of the terminal device may be a direction of the beam of the terminal device in a space coordinate system. The space coordinate system may be a geodetic coordinate system, and the geodetic coordinate system may include a relative geodetic coordinate system and an absolute geodetic coordinate system. A coordinate origin of the relative geodetic coordinate system is on a surface of an earth ellipsoid, while a coordinate origin of the absolute geodetic coordinate system is at the earth's core. It may be understood that the space coordinate system may also be a coordinate system in another form. This is not limited.

A direction of the beam of the terminal device in the space coordinate system may be understood as an absolute direction of the beam of the terminal device in the space coordinate system. For example, as shown in FIG. 8, a direction of a beam #1 in the space coordinate system is a due east direction, and a direction of a beam #2 in the space coordinate system is 30° north of east.

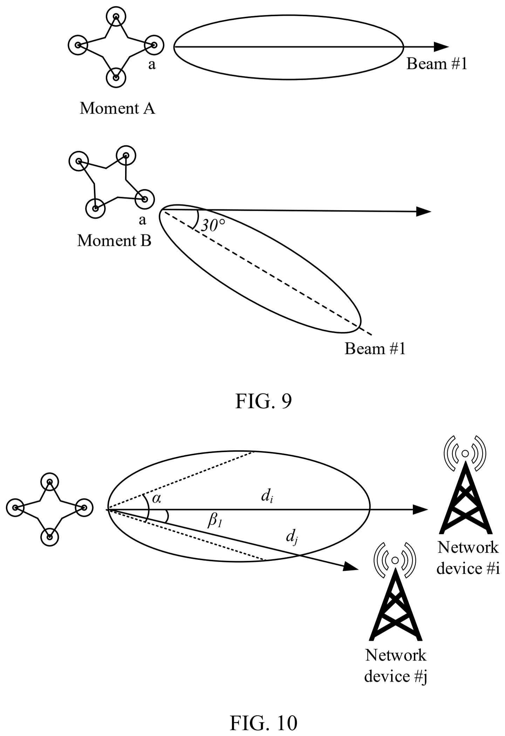

Alternatively, the beam direction of the terminal device may be an offset of the beam of the terminal device relative to a direction of the terminal device in the space coordinate system. In other words, the beam direction of the terminal device may be determined based on the absolute direction of the terminal device in the space coordinate system and the offset of the beam of the terminal device relative to the terminal device. It may be understood that the offset of the beam of the terminal device relative to the terminal device is fixed. In other words, when the direction of the terminal device changes, the beam of the terminal device remains unchanged relative to the direction of the terminal device. For example, as shown in FIG. 9, at a moment A, the direction of the terminal device in the space coordinate system is a due east direction, that is, a direction of a reference position a of the terminal device is a due east direction, and an offset angle of the beam #1 relative to the reference position a is 0°. In this case, it may be determined that a direction of the beam #1 is a due east direction. At a moment B, the direction of the terminal device in the space coordinate system is 30° south of east, that is, the direction of the reference position a of the terminal device is 30° south of east, and the offset angle of the beam #1 relative to the reference position a of the terminal device is 0°. In this case, it may be determined that the direction of the beam #1 is 30° south of east.

It may be understood that the beam direction of the terminal device may alternatively be determined in another manner. This is not limited.

The first indication information may further indicate a location of the terminal device, and the location may be a physical location of the terminal device. Specifically, if the terminal device includes a positioning apparatus, a positioning module, or another apparatus or module that can perform positioning, for example, a global positioning system (global positioning system, GPS) or a BeiDou navigation satellite system (BeiDou navigation satellite system, BDS), the terminal device may report the physical location of the terminal device to the first network device in real time. It may be understood that the location of the terminal device may alternatively be carried in other signaling or information. In other words, the terminal device may separately report the gain of the beam of the terminal device, and/or the width of the beam of the terminal device, and the location of the terminal device to the first network device by using different signaling. This is not limited.

The first indication information may be carried in at least one of the following: RRC, a MAC CE, a PUSCH, or a PUCCH. Therefore, the terminal device may report the first indication information to the first network device by using the RRC, the MAC CE, the PUSCH, or the PUCCH. It may be understood that the first indication information may alternatively be carried in other signaling. This is not limited.

It may be understood that a name of the first indication information is merely an example, and the first indication information may alternatively be indication information #1, beam information, or the like. This is not limited.

S602: The first network device sends a handover command to the terminal device based on the first indication information. The terminal device receives the handover command from the first network device.

The handover command may be used to instruct the terminal device to perform handover to a second network device. Specifically, the handover command may include identification information of the second network device, for example, a physical layer cell identifier (physical-layer cell ID) of the second network device. The identification information of the second network device may further include other signaling or information. This is not limited.

Specifically, first, the first network device may first determine a candidate network device set based on the location of the terminal device and the first indication information. A network device in the candidate network device set may satisfy at least one of the following conditions: The network device is located within a beam coverage area of the terminal device, a signal strength between the network device and the terminal device is greater than a first threshold, or signal interference caused to another network device other than the network device located within the beam coverage area of the terminal device is less than a second threshold.

The first threshold may represent a signal strength required for communication between the terminal device and the network device in the candidate network device set. The first threshold may be predefined or pre-configured. Predefined may be understood as information being defined in a standard and recorded or written in advance into hardware and/or software itself. Pre-configured may be understood as information being recorded or written in advance into hardware and/or software itself, where the information is determined by a factory device vendor, and may be changed by using software or hardware.

That the signal strength between the network device in the candidate network device set and the terminal device is greater than the first threshold may mean that a difference between the gain of the beam of the terminal device and a path loss is greater than the first threshold, where the path loss may be a path loss or a propagation loss between the terminal device and the network device. In other words, if the difference between the gain of the beam of the terminal device and the path loss is greater than the first threshold, it indicates that the terminal device may be connected to the network device. That is, the gain of the beam of the terminal device may meet a requirement for communicating with the network device.

It may be understood that a name of the first threshold is merely an example, and the first threshold may also be referred to as a first determining threshold or the like. This is not limited.

The second threshold may represent a signal strength corresponding to interference caused to the another network device within the beam coverage area of the terminal device after the terminal device establishes a connection to the network device in the candidate network device set. The second threshold may be predefined or pre-configured. For specific descriptions of predefinition and pre-configuration, refer to related descriptions in the first threshold. Details are not described again.

That the signal interference generated by the network device in the candidate network device set to the another network device other than the network device located within the beam coverage area of the terminal device is less than the second threshold may mean that a difference between the gain of the beam of the terminal device and a path loss is less than the second threshold, where the path loss is a path loss between the terminal device and the another network device other than the network device within the beam coverage area of the terminal device. In other words, if the difference between the gain of the beam of the terminal device and the path loss between the terminal device and the another network device other than the network device within the beam coverage area of the terminal device is less than the second threshold, it indicates that, after being connected to the network device, the terminal device does not cause interference to the another network device within the beam coverage area of the terminal device, or interference caused is small.

It may be understood that a name of the second threshold is merely an example, and the second threshold may also be referred to as a second determining threshold or the like. This is not limited. Then, the first network device determines the second network device from the candidate network device set.

If the candidate network device set includes one network device (for example, a network device #1), the first network device may directly determine the network device #1 as the second network device. If the candidate network device set includes a plurality of network devices, the terminal device may determine any network device (for example, a network device #2) in the candidate network device set as the second network device, or the terminal device may determine the second network device based on a preset determining condition.

Specifically, that the terminal device may determine the second network device based on the preset determining condition includes the following step:

The first network device may determine a network device (for example, a network device #3) with a largest signal strength in the candidate network device set as the second network device. In other words, the signal strength received by the terminal device from the network device #3 is the largest.

Alternatively, the first network device may determine, as the second network device, a network device that is in the candidate network device set and that causes the least maximum interference to another network device. For example, the candidate network device set includes three network devices, which are denoted as a network device #x, a network device #y, and a network device #z. After the terminal device is connected to the network device #x, interference is caused to a network device #s and a network device #t that are in the beam coverage area of the terminal device. Interference caused to the network device #s is sl, and interference caused to the network device #t is s2, where s1 is greater than s2. After the terminal device is connected to the network device #y, interference caused to a network device #u within the beam coverage area of the terminal device is u1. After the terminal device is connected to the network device #z, interference is caused to a network device #v and a network device #r within the beam coverage area of the terminal device. Interference caused to the network device #v is v1, and interference caused to the network device #r is r1, where v1 is greater than r1. If s1 > u1 > v1, the first network device may determine the network device #z as the second network device.

Alternatively, the first network device may determine, as the second network device, a network device that is in the candidate network device set and that causes the least total interference to another network device. For example, the candidate network device set includes three network devices, which are denoted as a network device #x, a network device #y, and a network device #z. After the terminal device is connected to the network device #x, total interference caused to a network device #s and a network device #t that are within the beam coverage area of the terminal device is s11. After the terminal device is connected to the network device #y, interference caused to a network device #u within the beam coverage area of the terminal device is u1. After the terminal device is connected to the network device #z, total interference caused to a network device #v and a network device #r that are within the beam coverage area of the terminal device is v11. If s11 > v11 > u1, the first network device may determine the network device #y as the second network device.

It may be understood that the beam of the terminal device may be a frequency range (frequency Range, FR)-1 beam, or may be an FR2 beam. The FR1 beam has a low frequency, a strong diffraction capability, and good coverage effect. The FR2 beam has a high frequency and a large bandwidth. Therefore, the terminal device may select a beam of a corresponding frequency band based on an actual application scenario. This is not limited.

For ease of understanding, the following specifically describes, by using two scenarios, a process in which the first network device determines the second network device.

Scenario 1:

If the first indication information includes a maximum power main lobe gain G of a beam of the terminal device, a half-power main lobe width of the beam of the terminal device, and a location of the terminal device, the terminal device establishes a connection to a network device #a. That is, the network device #a is a serving network device of the terminal device.

(1) The terminal device reports first indication information #1 to the network device #a.

It may be understood that, for a specific reporting process of the terminal device, refer to related descriptions in S601. Details are not described again.

(2) The network device #a may determine a candidate network device set based on the first indication information #1.

It is assumed that the network device #a knows a location of another network device (for example, a network device #i) within a preset distance range. For example, the network device #i may establish communication with the network device #a, and send a location of the network device #i to the network device #a. The preset distance range may be a distance between the another network device and the network device #a. The preset distance range may be adjusted based on an actual application scenario. This is not limited.

(2a) The network device #a determines whether the terminal device can communicate with the network device #i.

As shown in FIG. 10, the network device #a may determine a distance $d_i$ between the terminal device and the network device #i based on the location of the terminal device and the location of the network device #i. Assuming that a path loss between the terminal device and the network device #i is denoted as $f(d_i)$, that the terminal device is connected to the network device #i needs to satisfy $G - f(d_i) > X_1$, where $X_1$ is a first determining threshold #1 (namely, the foregoing first threshold).

If $G - f(d_i) > X_1$, it indicates that the terminal device can communicate with the network device #i. That is, a gain of the beam of the terminal device can meet a requirement for communicating with the network device #i. If $G - f(d_i) \leq X_1$, it indicates that the terminal device cannot communicate with the network device #i. That is, the gain of the beam of the terminal device cannot meet a requirement for communicating with the network device #i.

(2b) When the terminal device can communicate with the network device #i, the network device #a determines whether the terminal device causes interference to another network device (for example, a network device #j) within the beam coverage area of the terminal device after establishing a connection to the network device #i.

For example, as shown in FIG. 10, the network device #a may determine an included angle $\beta_1$ between the network device #i, the network device #j, and the terminal device based on the location of the terminal device, the location of the network device #i, and a location of the network device #j. If $\beta_1 \leq \dfrac{\alpha}{2}$, it indicates that the network device #j belongs to a network device within the beam coverage area of the terminal device. If $\beta_1 > \dfrac{\alpha}{2}$, it indicates that the network device #j does not belong to the network device within the beam coverage area of the terminal device.

When the network device #j belongs to the network device within the beam coverage area of the terminal device, the network device #a needs to further determine whether the terminal device causes interference to the network device #j after establishing a connection to the network device #i. For example, the network device #a may determine a distance $d_j$ between the terminal device and the network device #j based on the location of the terminal device and the location of the network device #j. Assuming that a path loss between the terminal device and the network device #j is denoted as $f(d_j)$, whether the terminal device causes interference to the network device #j after establishing a connection to the network device #i needs to satisfy $G - f(d_j) < Y_1$, where $Y_1$ is a second determining threshold #2 (namely, the foregoing second threshold).

If $G - f(d_j) < Y_1$, it indicates that the terminal device does not cause interference to the network device #j after establishing a connection to the network device #i. That is, the gain of the beam of the terminal device does not cause interference to the network device #j. In this case, the network device #i belongs to the network device in the candidate network device set. If $G - f(d_j) \geq Y_1$, it indicates that the terminal device does not cause interference to the network device #j after establishing a connection to the network device #i. That is, the gain of the beam of the terminal device does not cause interference to the network device #j. A process in which the network device #a determines the another network device is similar to a process in which the network device #a determines the network device #i. Reference may be made for understanding. Details are not described. Therefore, the network device #a may determine a candidate network device set #1 through the foregoing determining process.

It may be understood that the foregoing determining conditions $G - f(d_i) > X_1$ and $G - f(d_j) < Y_1$ are merely examples. The network device #a may alternatively determine the candidate network device set #1 in another manner. For example, the maximum power main lobe gain G of the beam of the terminal device may be replaced with the half-power main lobe gain of the beam of the terminal device or the equivalent isotropically radiated power. This is not limited.

(3) The network device #a determines the second network device from the candidate network device set #1.

If the candidate network device set #1 includes one network device (for example, the network device #i), the network device #a may determine the network device #i as the second network device.

If the candidate network device set includes a plurality of network devices, which are denoted as the network device #i, a network device #d, a network device #e, and a network device #f, the network device #a may determine any network device (for example, the network device #i) in the candidate network device set as the second network device.

Alternatively, the network device #a determines a network device with a largest signal strength in the network device #i, the network device #d, the network device #e, and the network device #f as the second network device, that is, $max\{G - f(d_i)|i \in I\}$, where $I$ is the candidate network device set #1, $i$ is a network device in the candidate network device set #1, $d_i$ is a distance between an $i^{th}$ network device in the candidate network device set #1 and the terminal device, and $f(d_i)$ is a path loss between the $i^{th}$ network device in the candidate network device set #1 and the terminal device. For example, if a signal strength received by the terminal device from the network device #d is the largest, the network device #a may determine the network device #d as the second network device.

Alternatively, the network device #a may determine, as the second network device, a network device that causes the least total interference to another network device and that are in the network device #i, the network device #d, the network device #e, and the network device #f, that is, $\min\limits_{i}\left\{max\{G-f(d_j)|j\in J\}\right\}$, where i ∈ *I*, *I* is the candidate network device set #1, *i* is a network device in the candidate network device set #1, *J* is an interfered network device set #1, *j* is a network device in the interfered network device set #1, $d_j$ is a distance between a j$^{th}$ network device in the interfered network device set #1 and the terminal device, and *f (d$_j$)* is a path loss between the j$^{th}$ network device in the interfered network device set #1 and the terminal device. In other words, after establishing a connection to the network device in the candidate network device set #1, the terminal device causes interference to the network device in the interfered network device set #1. For example, if the network device #e causes the least maximum interference to the another network device, the network device #a may determine the network device #e as the second network device.

Alternatively, the network device #a may determine, as the second network device, a network device that causes the least total interference to another network device and that are in the network device #i, the network device #d, the network device #e, and the network device #f, that is, $\min\limits_{i}\{\Sigma_j[G-f(d_j)]\}$, where *j* ∈ *J, i* ∈ *I, I* is the candidate network device set #1, *i* is a network device in the candidate network device set #1, *J* is an interfered network device set #1, *j* is a network device in the interfered network device set #1, $d_j$ is a distance between a j$^{th}$ network device in the interfered network device set #1 and the terminal device, and $f(d_j)$ is a path loss between the j$^{th}$ network device in the interfered network device set #1 and the terminal device. For example, if the network device #f causes the least total interference to the another network device, the network device #a may determine the network device #f as the second network device.

Scenario 2:

If the first indication information includes a maximum power main lobe gain G of a beam of the terminal device, a half-power main lobe width of the beam of the terminal device, a location of the terminal device, and a beam direction of the terminal device, the terminal device establishes a connection to a network device #b. That is, the network device #b is a serving network device of the terminal device.

(1) The terminal device reports first indication information #2 to the network device #b.

It may be understood that, for a specific reporting process of the terminal device, refer to related descriptions in S601. Details are not described again.

(2) The network device #b may determine a candidate network device set #2 based on the first indication information #2.

When the first indication information #2 includes the beam direction of the terminal device, the network device #b may determine the candidate network device set #2 and a beam corresponding to each network device in the candidate network device set #2.

The following uses a beam #1 of the terminal device as an example for description.

It is assumed that the network device #b knows a location of another network device (for example, a network device #m) within a preset distance range. For example, the network device #m may establish communication with the network device #b, and send a location of the network device #m to the network device #b. The preset distance range may be a distance between the another network device and a network device #a. It may be understood that the preset distance range may be adjusted based on an actual application scenario. This is not limited.

(2i) The network device #b determines whether the terminal device can communicate with the network device #m.

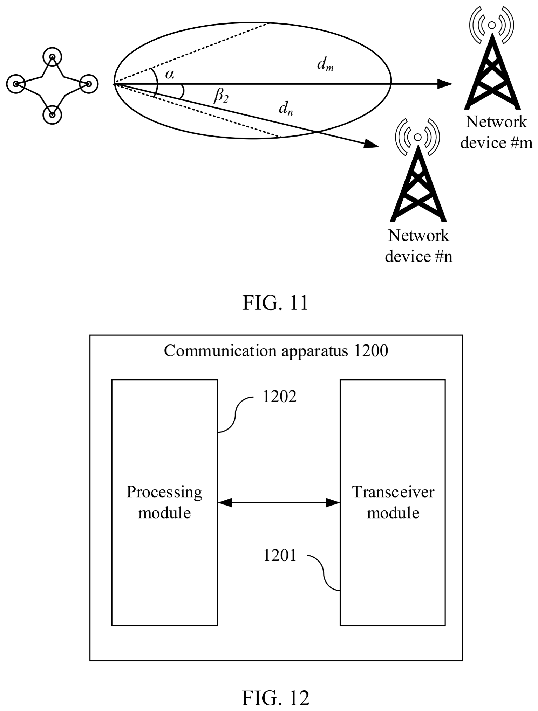

As shown in FIG. 11, the network device #b may determine a distance $d_m$ between the terminal device and the network device #m based on the location of the terminal device and the location of the network device #m. Assuming that a path loss between the terminal device and the network device #m is denoted as $f(d_m)$, that the terminal device may be connected to the network device #m by using the beam #1 needs to satisfy *max{G - f(d$_n$)|m* ∈ *M}* and *G - f(d$_n$) > X$_2$*, where M is a network device set that can be covered by the beam #1, and $X_2$ is a first determining threshold #2 (namely, the foregoing first threshold).

If *max{G - f(d$_n$)|m* ∈ *M}* and *G - f(d$_m$) > X$_2$,* it indicates that the terminal device may communicate with the network device #m by using the beam #1. That is, a gain of the beam #1 can meet a requirement for communication between the terminal device and the network device #m.

(2ii) When the terminal device can communicate with the network device #m by using the beam #1, the network device #b determines whether the terminal device causes interference to another network device (for example, a network device #n) within a coverage area of the beam #1 after establishing a connection to the network device #m by using the beam #1.

For example, as shown in FIG. 11, the network device #b may determine an included angle $\beta_2$ between the network device #m, the network device #n, and the terminal device based on the location of the terminal device, the location of the network device #m, and a location of the network device #n. If $\beta_2 \leq \frac{\alpha}{2}$, it indicates that the network device #n belongs to a network device within the coverage area of the beam #1. If $\beta_2 > \frac{\alpha}{2}$, it indicates that the network device #n does not belong to the network device within the coverage area of the beam #1.

When the network device #n belongs to the network device within the coverage area of the beam #1, the network device #b may determine a distance $d_n$ between the terminal device and the network device #n based on the location of the terminal device and the location of the network device #n. Assuming that a path loss between the terminal device and the network device #n is denoted as $f(d_n)$, whether the terminal device causes interference to the network device #n after establishing a connection to the network device #m by using the beam #1 needs to satisfy $G - f(d_n) < Y_2$, where $n \in M$, $n$ is not a network device in the candidate network device set #2, M is a network device set that can be covered by the beam #1, and $Y_2$ is a second determining threshold #2 (namely, the foregoing second threshold).

If $G - f(d_n) < Y_2$, it indicates that the terminal device does not cause interference to the network device #n after establishing a connection to the network device #m by using the beam #1. That is, the gain of the beam #1 does not cause interference to the network device #n. In this case, the network device #m belongs to a network device #2 in the candidate network device set #2. If $G - f(d_n) \geq Y_2$, it indicates that the terminal device causes interference to the network device #n after establishing a connection to the network device #m by using the beam #1. That is, the gain of the beam #1 causes interference to the network device #n.

A process in which the network device #b determines another beam of the terminal device is similar to a process in which the network device #b determines a beam #m. Reference may be made for understanding. Details are not described. Therefore, the network device #b may determine, based on the foregoing determining process, the candidate network device set #2 and a beam corresponding to each network device in the candidate network device set #2.

It may be understood that the foregoing determining conditions $max\{G - f(d_m)|m \in M\}$, $G - f(d_m) > X_2$, and $G - f(d_n) < Y_2$ are merely examples. The network device #b may alternatively determine the candidate network device set in another manner. For example, the maximum power main lobe gain G of the beam of the terminal device may be replaced with the half-power main lobe gain of the beam of the terminal device or the equivalent isotropically radiated power. This is not limited.

(3) The network device #b determines the second network device from the candidate network device set #2.

If the candidate network device set #2 includes one network device (for example, the network device #m, corresponding to the beam #1), the network device #b may determine the network device #m as the second network device.

If the candidate network device set #2 includes a plurality of network devices, which are denoted as the network device #m (corresponding to the beam #1), the network device #n (corresponding to a beam #3), and a network device #o (corresponding to a beam #4), the terminal device may determine any network device (for example, the network device #m) in the candidate network device set as the second network device.

Alternatively, the network device #b may determine a network device with a largest signal strength in the network device #m, the network device #n, and the network device #o as the second network device, that is, $max\{G - f(d_b)|b \in B\}$, where $B$ is a candidate beam set, $b$ is a beam in the candidate beam set, $d_b$ is a distance between a network device corresponding to a $b^{th}$ beam and the terminal device, and $f(d_b)$ is a path loss between the network device corresponding to the $b^{th}$ beam and the terminal device. It may be understood that the candidate beam set may include the beam #1, the beam #3, and the beam #4. For example, if a signal strength received by the terminal device from the network device #n is the largest, the network device #b may determine the network device #n as the second network device.

Alternatively, the network device #b may determine, as the second network device, a network device that causes the least total interference to another network device and that are in the network device #m (corresponding to the beam #1), the network device #n (corresponding to the beam #3), and the network device #o (corresponding to the beam #4), that is,

$$\min_{b}\left\{max\left\{G' - f(d_p)|p \in P, b \in B\right\}\right\}$$

, where $B$ is a candidate beam set, $b$ is a beam in the candidate beam set, $P$ is an interfered network device set #2, $p$ is a network device in the interfered network device set #2, $d_p$ is a distance between a $p^{th}$ network device in the interfered network device set #2 and the terminal device, and $f(d_p)$ is a path loss between the $p^{th}$ network device in the interfered network device set #2 and the terminal device. In other words, the terminal device causes interference to the network device in the interfered network device set #2 after establishing a connection to the network device in the candidate network device set #2. For example, if the network device #o causes the least maximum interference to the another network device, the network device #b may determine the network device #o as the second network device.

Alternatively, the network device #b may determine, as the second network device, a network device that causes the least total interference to another network device and that are in the network device #m (corresponding to the beam #1), the network device #n (corresponding to the beam #3), and the network device #o (corresponding to the beam #4), that is,

$$\min_{b}\{\Sigma_p[G - f(d_p)]\}$$ , where $p \in P$, $b \in B$, $B$ is a candidate beam set, $b$ is a b<sup>th</sup> beam in the candidate beam set, $P$

is an interfered network device set #2, $p$ is a network device in the interfered network device set #2, $d_p$ is a distance between a $p^{th}$ network device in the interfered network device set #2 and the terminal device, and $f(d_p)$ is a path loss between the $p^{th}$ network device in the interfered network device set #2 and the terminal device. For example, if the network device #o causes the least total interference to the another network device, the network device #b may determine the network device #o as the second network device.

In conclusion, because the gain and/or the width of the beam of the terminal device may indicate the beam coverage area of the terminal device, the first network device may determine the beam coverage area of the terminal device based on the first indication information reported by the terminal device. In this way, the first network device can directly indicate the terminal device to perform handover to a network device that can be covered by the beam of the terminal device, for example, the second network device, to schedule the terminal device more efficiently.

With reference to the foregoing embodiment, optionally, the method further includes the following step:

The first network device sends second indication information to the terminal device. The terminal device receives the second indication information from the first network device. The first network device receives the first indication information returned by the terminal device based on the second indication information.

The second indication information indicates the terminal device to report indication information of the terminal device. In other words, whether the terminal device reports the indication information of the terminal device to the first network device may be flexibly scheduled by the first network device based on the second indication information, to implement on-demand reporting and avoid communication redundancy.

It may be understood that the terminal device may report the indication information of the terminal device to the first network device based on the second indication information sent by the first network device, which is merely an example and is not limited. For example, regardless of whether the terminal device receives the second indication information, the terminal device may report the indication information of the terminal device to the first network device.

The second indication information may be carried in at least one of the following: RRC, a MAC CE, a PDSCH, or a PDCCH. Therefore, the first network device may send the second indication information to the terminal device by using the RRC, the MAC CE, the PDSCH, or the PDCCH. It may be understood that the second indication information may alternatively be carried in other signaling. This is not limited. A name of the second indication information is merely an example, and the second indication information may alternatively be indication information #2 or the like. This is not limited.

For the first indication information, refer to related descriptions in S601. Details are not described again.

Optionally, the foregoing method further includes the following steps:

The first network device may send third indication information to the terminal device. The terminal device may receive the third indication information from the first network device.

The terminal device may send capability information of the terminal device to the first network device based on the third indication information.

The third indication information may indicate the terminal device to report a capability of the terminal device. The capability of the terminal device may be whether the terminal device can support reporting the indication information of the terminal device, for example, whether the terminal device supports reporting information such as the gain of the beam of the terminal device, the width of the beam of the terminal device, and the location of the terminal device to the first network device, or whether the terminal device supports a digital/analog beamforming capability. The capability information of the terminal device may indicate that the terminal device can report the indication information of the terminal device. For example, the capability information of the terminal device may include beam capability identification information of the terminal device. Therefore, the first network device may determine, based on the beam capability identification information, whether the terminal device can report the indication information of the terminal device.

In a possible design solution, the first network device may send the third indication information to the terminal device. The third indication information indicates the terminal device to report the capability information of the terminal device and the indication information of the terminal device together to the first network device. In other words, the first indication information may include the capability information of the terminal device and the indication information of the terminal device.

In a possible design solution, the first network device may first send the third indication information to the terminal device. The third indication information indicates the terminal device to report the capability information of the terminal device to the first network device. After the first network device determines that the terminal device can report the indication information of the terminal device, the first network device then delivers the indication information to a network device, for example, the foregoing second indication information, to indicate the terminal device to report the indication information of the terminal device. This prevents the first network device from subsequently delivering, to the terminal device, information or signaling that does not meet a capability of the first network device, thereby avoiding unnecessary overheads caused by delivering redundant information by the terminal device.

Optionally, the foregoing method further includes: The terminal device performs handover to the second network device according to the handover command.

It may be learned from S601 that the handover command may include identification information of the second network device, for example, a physical layer cell identifier (physical-layer cell ID) of the second network device. Therefore, when performing receive beam sweeping, the terminal device may receive an SSB based on the physical layer cell identifier of the second network device. After the terminal device receives the SSB, the terminal device may perform blind detection on a PSS and an SSS, to obtain corresponding $N_{ID}^{(1)}$ and $N_{ID}^{(2)}$. Correspondingly, the terminal device obtains an SSID. For a specific implementation procedure, refer to related descriptions in the foregoing technical terms. Details are not described again. Therefore, the terminal device may establish a connection to the second network device based on the physical layer cell identifier and the SSID of the second network device.

It may be understood that, if the terminal device reports the beam direction of the terminal device to the first network device, the terminal device may directly receive the SSB by using the beam corresponding to the second network device. In this case, the terminal device does not need to perform beam sweeping to receive the SSB.

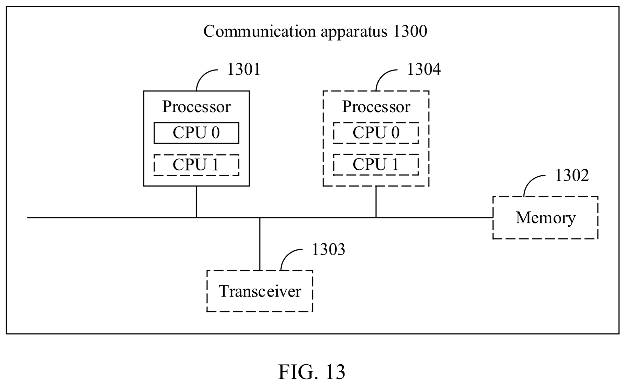

The foregoing describes in detail, with reference to FIG. 6 to FIG. 11, the communication methods provided in embodiments of this application. The following describes in detail, with reference to FIG. 12 and FIG. 13, communication apparatuses configured to perform the communication method provided in embodiments of this application.

FIG. 12 is a diagram 1 of a structure of a communication apparatus according to an embodiment of this application. For example, as shown in FIG. 12, the communication apparatus 1200 includes a transceiver module 1201 and a processing module 1202. For ease of description, FIG. 12 shows only main parts of the communication apparatus 1200.

In some embodiments, the communication apparatus 1200 is applicable to the communication system shown in FIG. 3, and performs a function of the foregoing terminal device.

For example, the transceiver module 1201 is configured to send first indication information to a first network device. The transceiver module 1201 is further configured to receive a handover command from the first network device. The first indication information indicates a gain of a beam of the communication apparatus 1200 and/or a width of the beam of the communication apparatus 1200; and the handover command is used to instruct the communication apparatus 1200 to perform handover to a second network device.

In a possible design solution, the gain of the beam of the communication apparatus 1200 includes at least one of the following: a maximum power main lobe gain of the beam of the communication apparatus 1200, a half-power main lobe gain of the beam of the communication apparatus 1200, or equivalent isotropically radiated power.

In a possible design solution, the width of the beam of the communication apparatus 1200 includes at least one of the following: a half-power main lobe width of the beam of the communication apparatus 1200, or a quantity of beams of the communication apparatus 1200.

In a possible design solution, the first indication information further indicates a beam direction of the communication apparatus 1200.

In a possible design solution, the first indication information further indicates a location of the communication apparatus 1200.

Optionally, the transceiver module 1201 is further configured to receive second indication information from the first network device. The processing module 1202 is configured to control, based on the second indication information, the transceiver module 1201 to send the first indication information to the first network device. The second indication information indicates the communication apparatus 1200 to report indication information of the terminal device.

Optionally, the transceiver module 1201 is further configured to receive third indication information from the first network device. The processing module 1202 is further configured to control, based on the third indication information, the transceiver module 1201 to send capability information of the communication apparatus 1200 to the first network device. The third indication information indicates the communication apparatus 1200 to report a capability of the terminal device, and the capability of the communication apparatus 1200 is whether the communication apparatus 1200 is capable of reporting indication information of the communication apparatus 1200. The capability information of the communication apparatus 1200 indicates that the communication apparatus 1200 is capable of reporting the indication information of the terminal device.

Optionally, the processing module 1202 is configured to perform handover to the second network device according to the handover command.

Further, the first indication information is carried in at least one of the following: a radio resource control RRC message, a medium access control control element MAC CE, a physical uplink shared channel PUSCH, or a physical uplink control channel PUCCH.

Optionally, the transceiver module 1201 may include a sending module (not shown in FIG. 12) and a receiving module (not shown in FIG. 12). The sending module is configured to implement a sending function of the communication apparatus 1200, and the receiving module is configured to implement a receiving function of the communication apparatus 1200.

Optionally, the communication apparatus 1200 may further include a storage module (not shown in FIG. 12). The storage module stores a program or instructions. When the processing module 1202 executes the program or the instructions, the communication apparatus 1200 is enabled to perform a function of the terminal device in the method shown in FIG. 6.

It may be understood that the communication apparatus 1200 may be a terminal device, may be a chip (system) or another part or component that may be disposed in the terminal device, or may be an apparatus including a terminal apparatus. This is not limited in embodiments of this application. It may be understood that, if the communication apparatus 1200 is a chip (system) disposed in the device, the transceiver module 1201 may be an input/output interface of the chip (system), for example, an input/output circuit or a pin.

In addition, for technical effects of the communication apparatus 1200, refer to the technical effects of the communication method shown in FIG. 6. Details are not described herein again.

In some embodiments, the communication apparatus 1200 is applicable to the communication system shown in FIG. 3, and performs a function of the foregoing first network device.

For example, the transceiver module 1201 is configured to receive the first indication information from the terminal device. The processing module 1202 is configured to control, based on the first indication information, the transceiver module 1201 to send a handover command to the terminal device. The first indication information indicates a gain of a beam of the terminal device and/or a width of the beam of the terminal device, and the handover command is used to instruct the terminal device to perform handover to a second network device.

In a possible design solution, the gain of the beam of the terminal device includes at least one of the following: a maximum power main lobe gain of the beam of the terminal device, a half-power main lobe gain of the beam of the terminal device, or equivalent isotropically radiated power.

In a possible design solution, the width of the beam of the terminal device includes at least one of the following: a half-power main lobe width of the beam of the terminal device, or a quantity of beams of the terminal device.

In a possible design solution, the first indication information further indicates a beam direction of the terminal device.

In a possible design solution, the first indication information further indicates a location of the terminal device.

Optionally, the transceiver module 1201 is further configured to send the second indication information to the terminal device. The transceiver module 1201 is further configured to receive the first indication information returned by the terminal device based on the second indication information. The second indication information indicates the terminal device to report indication information of the terminal device.

Optionally, the transceiver module 1201 is further configured to send the third indication information to the terminal device. The transceiver module 1201 is further configured to receive the capability information from the terminal device. The third indication information indicates the terminal device to report a capability of the terminal device, and the capability of the terminal device is whether the terminal device is capable of reporting the indication information of the terminal device. The capability information of the terminal device indicates that the terminal device is capable of reporting the indication information of the terminal device.

Further, the first indication information is carried in at least one of the following: a radio resource control RRC message, a medium access control control element MAC CE, a physical uplink shared channel PUSCH, or a physical uplink control channel PUCCH.

Optionally, the transceiver module 1201 may include a sending module (not shown in FIG. 12) and a receiving module (not shown in FIG. 12). The sending module is configured to implement a sending function of the communication apparatus 1200, and the receiving module is configured to implement a receiving function of the communication apparatus 1200.

Optionally, the communication apparatus 1200 may further include a storage module (not shown in FIG. 12). The storage module stores a program or instructions. When the processing module 1202 executes the program or the instructions, the communication apparatus 1200 is enabled to perform a function of the first network device in the communication method shown in FIG. 6.

It may be understood that the communication apparatus 1200 may be a network device, may be a chip (system) or another part or component that may be disposed in the network device, or may be an apparatus including the network device. This is not limited in embodiments of this application. It may be understood that, if the communication apparatus 1200 is a chip (system) disposed in the device, the transceiver module 1201 may be an input/output interface of the chip (system), for example, an input/output circuit or a pin.

In addition, for technical effects of the communication apparatus 1200, refer to the technical effects of the communication method shown in FIG. 6. Details are not described herein again.

FIG. 13 is a diagram 2 of a structure of a communication apparatus according to an embodiment of this application. For example, the communication apparatus may be a terminal, or may be a chip (system) or another part or component that may be disposed in the terminal. As shown in FIG. 13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected to the memory 1302 and the transceiver 1303 through a communication bus.

The following specifically describes each component of the communication apparatus 1300 with reference to FIG. 13.

The processor 1301 is a control center of the communication apparatus 1300, and may be one processor, or may be a collective term of a plurality of processing elements. For example, the processor 1301 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1301 may perform various functions of the communication apparatus 1300 by running or executing a software program stored in the memory 1302 and invoking data stored in the memory 1302, for example, perform the communication method shown in FIG. 6.

During specific implementation, in an embodiment, the processor 1301 may include one or more CPUs, such as a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may be one or more devices, circuits, and/or processing cores configured to process data (for example, computer program instructions).

The memory 1302 is configured to store the software program for executing the solutions in embodiments of this application, and the processor 1301 controls execution. For a specific implementation, refer to the foregoing method embodiments. Details are not described herein again.

Optionally, the memory 1302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is a terminal, and the transceiver 1303 may be configured to communicate with a network device or communicate with another terminal device. For another example, the communication apparatus 1300 is a network device, and the transceiver 1303 may be configured to communicate with a terminal or communicate with another network device.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently, and is coupled to the processor 1301 through the interface circuit (not shown in FIG. 13) of the communication apparatus 1300. This is not specifically limited in this embodiment of this application.

It may be understood that a structure of the communication apparatus 1300 shown in FIG. 13 does not constitute a limitation on the communication apparatus. An actual communication apparatus may include more or fewer components than those shown in the figure, or a combination of a part of the components, or an arrangement of different components.

In addition, for technical effects of the communication apparatus 1300, refer to the technical effects of the methods in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used for implementation, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually represents an "or" relationship between the associated objects, but may also represent an "and/or" relationship. For details, refer to the context for understanding.

In embodiments of this application, "at least one" means one or more, and "plurality of" means two or more. "At least one of the following" or a similar expression thereof means any combination of these items, including a singular item or any combination of plural items. For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in embodiments of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

    sending, by a terminal device, first indication information to a first network device, wherein the first indication information indicates a gain of a beam of the terminal device and/or a width of the beam of the terminal device; and
    receiving, by the terminal device, a handover command from the first network device, wherein the handover command is used to instruct the terminal device to perform handover to a second network device.

2. The method according to claim 1, wherein the gain of the beam of the terminal device comprises at least one of the following:
    a maximum power main lobe gain of the beam of the terminal device, a half-power main lobe gain of the beam of the terminal device, or equivalent isotropically radiated power.

3. The method according to claim 1, wherein the width of the beam of the terminal device comprises at least one of the following:
    a half-power main lobe width of the beam of the terminal device, or a quantity of beams of the terminal device.

4. The method according to any one of claims 1 to 3, wherein the first indication information further indicates a beam direction of the terminal device.

5. The method according to claim 4, wherein the first indication information further indicates a location of the terminal device.

6. The method according to any one of claims 1 to 5, wherein the method further comprises:

    receiving, by the terminal device, second indication information from the first network device, wherein the second indication information indicates the terminal device to report indication information of the terminal device; and
    sending, by the terminal device, the first indication information to the first network device comprises:
    sending, by the terminal device, the first indication information to the first network device based on the second indication information.

7. The method according to claim 6, wherein the method further comprises:

    receiving, by the terminal device, third indication information from the first network device, wherein the third indication information indicates the terminal device to report a capability of the terminal device, and the capability of the terminal device is whether the terminal device is capable of reporting the indication information of the terminal device; and

sending, by the terminal device, capability information of the terminal device to the first network device based on the third indication information, wherein the capability information of the terminal device indicates that the terminal device is capable of reporting the indication information of the terminal device.

8. The method according to any one of claims 1 to 7, wherein the method further comprises:
performing, by the terminal device, handover to the second network device according to the handover command.

9. The method according to any one of claims 1 to 8, wherein the first indication information is carried in at least one of the following:
a radio resource control RRC message, a medium access control control element MAC CE, a physical uplink shared channel PUSCH, or a physical uplink control channel PUCCH.

10. A communication method, comprising:

receiving, by a first network device, first indication information from a terminal device, wherein the first indication information indicates a gain of a beam of the terminal device and/or a width of the beam of the terminal device; and
sending, by the first network device, a handover command to the terminal device based on the first indication information, wherein the handover command is used to instruct the terminal device to perform handover to a second network device.

11. The method according to claim 10, wherein the gain of the beam of the terminal device comprises at least one of the following:
a maximum power main lobe gain of the beam of the terminal device, a half-power main lobe gain of the beam of the terminal device, or equivalent isotropically radiated power.

12. The method according to claim 10, wherein the width of the beam of the terminal device comprises at least one of the following:
a half-power main lobe width of the beam of the terminal device, or a quantity of beams of the terminal device.

13. The method according to any one of claims 10 to 12, wherein the first indication information further indicates a beam direction of the terminal device.

14. The method according to claim 13, wherein the first indication information further indicates a location of the terminal device.

15. The method according to any one of claims 10 to 14, wherein the method further comprises:

sending, by the first network device, second indication information to the terminal device, wherein the second indication information indicates the terminal device to report indication information of the terminal device; and
receiving, by the first network device, the first indication information from the terminal device comprises:
receiving, by the first network device, the first indication information returned by the terminal device based on the second indication information.

16. The method according to claim 15, wherein the method further comprises:

sending, by the first network device, third indication information to the terminal device, wherein the third indication information indicates the terminal device to report a capability of the terminal device, and the capability of the terminal device is whether the terminal device is capable of reporting the indication information of the terminal device; and
receiving, by the first network device, capability information from the terminal device, wherein the capability information of the terminal device indicates that the terminal device is capable of reporting the indication information of the terminal device.

17. The method according to any one of claims 10 to 16, wherein the first indication information is carried in at least one of the following:
a radio resource control RRC message, a medium access control control element MAC CE, a physical uplink shared channel PUSCH, or a physical uplink control channel PUCCH.

18. A communication apparatus, wherein the apparatus comprises modules configured to perform the method according to any one of claims 1 to 17.

19. A communication apparatus, wherein the communication apparatus comprises a processor and a memory, the memory is configured to store computer instructions, and when the processor executes the instructions, the communication apparatus is enabled to perform the method according to any one of claims 1 to 17.

20. A computer-readable storage medium, wherein the computer-readable storage medium comprises a computer program or instructions, and when the computer program or the instructions are run on a computer, the computer is enabled to perform the method according to any one of claims 1 to 17.

FIG. 1

FIG. 2

FIG. 3

NR-NB

TRP

FIG. 4

CU

DU

FIG. 5

**FIG. 6**

**FIG. 7**

**FIG. 8**

FIG. 9

FIG. 10

FIG. 11

FIG. 12

EP 4 651 594 A1

Communication apparatus 1300

1301

Processor

CPU 0

CPU 1

1304

Processor

CPU 0

CPU 1

1302

Memory

1303

Transceiver

FIG. 13

35

## INTERNATIONAL SEARCH REPORT

| International application No. |
| --- |
| **PCT/CN2023/142969** |

| A. | CLASSIFICATION OF SUBJECT MATTER |
| --- | --- |

H04W 72/044(2023.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT: WPABSC; ENTXTC; VEN; DWPI; CJFD; 3GPP: 波束, 增益, 功率, 宽度, 切换, 网络设备, 网络装置, beam, gain, power, width, switch+, handoff, hand off, hand over, network device?, network euqipment

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115175254 A (HUAWEI TECHNOLOGIES CO., LTD.) 11 October 2022 (2022-10-11) description, paragraphs 152-268, and figures 3-11 | 1-20 |
| X | CN 111918304 A (HUAWEI TECHNOLOGIES CO., LTD.) 10 November 2020 (2020-11-10) description, paragraphs 124-230, and figures 2-9 | 1-20 |
| A | CN 115623498 A (HUAWEI TECHNOLOGIES CO., LTD.) 17 January 2023 (2023-01-17) entire document | 1-20 |
| A | WO 2023011195 A1 (HUAWEI TECHNOLOGIES CO., LTD.) 09 February 2023 (2023-02-09) entire document | 1-20 |
| A | 沈俊等 (SHEN, Jun et al.). "低轨卫星通信系统中的一种波束小区切换算法 (A Spot Beam Cell Handover Algorithm in LEO Satellite Communication System)" 电讯技术 (Telecommunication Engineering), No. 04, 23 April 2020 (2020-04-23), entire document | 1-20 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 January 2024** | **20 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/142969**

| Patent document cited in search report | | | Publication date (day/month/year) | Patent family member(s) | | | Publication date (day/month/year) |
|---|---|---|---|---|---|---|---|
| CN | 115175254 | A | 11 October 2022 | WO | 2022206313 | A1 | 06 October 2022 |
| | | | | EP | 4307767 | A1 | 17 January 2024 |
| CN | 111918304 | A | 10 November 2020 | CN | 111918304 | B | 29 July 2022 |
| CN | 115623498 | A | 17 January 2023 | WO | 2023284628 | A1 | 19 January 2023 |
| WO | 2023011195 | A1 | 09 February 2023 | | None | | |

Form PCT/ISA/210 (patent family annex) (July 2022)

**EP 4 651 594 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310188631X